# EUROPEAN PATENT APPLICATION

(11) **EP 4 454 876 A1**
(43) Date of publication of application: **30.10.2024**
(21) Application number: 23170730.8
(22) Date of filing: 28.04.2023
(51) Int. Cl.: B32B 1/00, B32B 5/02, B32B 5/06, B32B 5/08, B32B 5/26, B32B 7/028, B32B 7/10, B32B 7/12, B32B 37/04, D04H 1/00, D04H 1/06, D04H 1/435, D04H 1/46, D04H 1/55, D04H 1/559, D04H 3/14, D04H 3/16, D04H 1/498, D04H 3/011

(54) **NONWOVEN LAMINATE**

(71) Applicant: Carl Freudenberg KG, 69469 Weinheim (DE)
(72) Inventor: Venugopal, Arun Prasad, 69469 Weinheim (DE); Jovanovic, Aleksander, 4205 Preddvor (SI)

(57) **Abstract**

Subject of the invention is a nonwoven laminate, consisting of, in order (A) to (C):
- a spunbond nonwoven layer (A) comprising fibres, which comprise polyethylene terephthalate (PET) and copolyester;
- an optional spunbond nonwoven layer (B) comprising fibres, which comprise polyethylene terephthalate (PET) and copolyester, the nonwoven layer (B) having a higher copolyester content than nonwoven layer (A);
- a needled staple fibre nonwoven layer (C), comprising:
∘ monocomponent polyethylene terephthalate (PET) staple fibres (c1), and
∘ multicomponent staple fibres (c2), which comprise at least a polyethylene terephthalate (PET) component and a copolyester component.

wherein all layers are melt-bonded to each other.

The invention relates also to moulded articles comprising the nonwoven laminate, to uses thereof and to production methods.

## Description

The invention relates to nonwoven laminates and moulded articles comprising such nonwoven laminates.

### State of the art

Shaped articles for various applications can be obtained by moulding nonwoven laminates. Such articles are suitable for automotive applications where lightweight parts are required which have high stability and durability, such as underbody shields.

EP 3 769 954 A1 discloses a nonwoven laminate and moulded articles produced therefrom which can be used as underbody shields for vehicles. The nonwoven laminates comprise three to five layers of nonwoven fabrics, which are melt-bonded to each other. The structure is characterized by a needled staple fiber nonwoven layer, which is enclosed between two outer spunbond nonwoven layers. The layers are basically formed from polyethylene terephthalate (PET) fibers and copolyester fibers for melt-bonding. The moulded articles produced by moulding such nonwoven laminates have high mechanical stability and provide acoustic shielding.

US 2016/0288451 A1 discloses nonwoven composites, which are mouldable and can be used for producing vehicle underbodies. The nonwoven composites comprise a layer of needled stapled polyester fibers and layers of spun-bond polyester fibers, which are mechanically bonded to each other by needling.

US 2018/0251924 A1 relates to a nonwoven composite, which can be used for various applications. The composite is characterized by specific hydrophobic PET fibers and polyalkylsiloxane-based or per-fluorinated additives.

However, such nonwoven composites and moulded articles obtained therefrom could still be improved. For use in the automotive industry, challenging internal standards have to be met regarding mechanical stability and durability. Thereby, it is assured that the products are suitable for long-term use without deterioration and loss of advantageous properties. Structural automotive parts, such as underbody shields, wheel arch liners or engine shields, are exposed to mechanical stress and strain over long-time periods. They should maintain their integrity and properties even after long-term use under challenging conditions. Structural parts for vehicles must also have resistance against stone-chipping, which occurs continuously during standard use and causes high mechanical strain.

### Problem underlying the invention

It is a problem of the present invention to provide a novel material which at least partially overcomes the drawbacks encountered in the art. Improved products should be provided, which are suitable for structural parts, especially for vehicles. The products should have high mechanical stability and should be suitable for long-term use. Preferably, the materials should have good acoustic properties, recyclability, low weight and low heat shrinking, and which shows reduced elephant skin effect.

It is a specific problem to provide respective materials, such as nonwoven composites and moulded articles, which have high resistance against stone-chipping. Accordingly, the nonwoven composites and moulded articles should be highly suitable for structural parts for exterior applications in which stone-chipping is a problem, such as underbody shields, wheel arch liners or engine shields.

It is a further problem that the materials can be produced and shaped in a simple and convenient method. The materials should be available at low costs and by standard processing methods.

### Disclosure of the invention

Surprisingly, it was found that the problem underlying the invention is solved by nonwoven laminates and moulded articles according to the claims. Further embodiments are outlined throughout the description.

Subject of the invention is a nonwoven laminate, which consists of, in order (A) to (C):
- a spunbond nonwoven layer (A) comprising fibres, which comprise polyethylene terephthalate (PET) and copolyester;
- an optional spunbond nonwoven layer (B) comprising fibres, which comprise polyethylene terephthalate (PET) and copolyester, the nonwoven layer (B) having a higher copolyester content than nonwoven layer (A);
- a needled staple fibre nonwoven layer (C), comprising:
   ∘ monocomponent polyethylene terephthalate (PET) staple fibres (c1), and
   ∘ multicomponent staple fibres (c2), which comprise at least a polyethylene terephthalate (PET) component and a copolyester component.
wherein all layers are melt-bonded to each other.

As used herein, the term nonwoven relates to a nonwoven fabric. This is a layer of fibers, which are consolidated by physical and/or chemical means, excluding weaving, knitting or paper making. In general, a nonwoven fabric is defined by DIN EN ISO 9092:2018.

A spunbond generally refers to a fabric comprising theoretically endless fibres which are drawn from molten fibre raw material. It is preferred that spunbond nonwoven layers (A) and (B), respectively, are made of continuous filament calendared together in the form of a sheet. In all embodiments described herein, layer (B) is only optional, unless explicitly stated otherwise.

A staple fibre generally refers to a fibre of discrete length. A group of staple fibres has an average length of the fibres in the group, which is referred to as staple length.

A needled nonwoven layer generally refers to a layer from a plurality of fibres, which have been intermingled and consolidated using needles.

Polyethylene terephthalate is a copolymer of terephthalic acid and ethane-1,2-diol (also referred to as ethylene glycol).

Copolyester is a copolymer of a first diacid monomer and a first diol monomer, together with one or both of at least one second different diacid monomer and at least one second different diol monomer. Herein, a diacid monomer preferably refers to a dicarboxylic acid monomer.

Melt-bonding (thermal bonding) generally refers to a technique of joining polymeric, usually thermoplastic, materials by applying heat, such that at least one material is partially molten or softened, bringing the materials into intimate contact, followed by cooling.

In the inventive nonwoven laminate, layers (A) and (C), and if present also intermediate layer (B), are melt-bonded to each other. This can be achieved by forming a stack of the layers and melt-bonding the stack. The melt-bonding of all layers to each other can lead to high homogeneity of the heat-shrinking properties of the nonwoven laminates. The high homogeneity of the heat-shrinking properties can reduce the formation of elephant skin during moulding. Due to reduced formation of elephant skin, the nonwoven laminate can have appealing aesthetics and a higher bending strength after moulding. The melt-bonding of the layers to each other can also confer high dimensional stability to the nonwoven laminate when heated and shaped.

All layers comprise polyethylene terephthalate. Polyethylene terephthalate is herein also referred to as "PET". The polyethylene terephthalate can be virgin polyethylene terephthalate (which was not recycled), recycled polyethylene terephthalate (also referred to as "r-PET"), or a mixture of virgin and recycled polyethylene terephthalate. Virgin polyethylene terephthalate can allow for a more precise setting of mechanical properties of the nonwoven laminate. Recycled polyethylene terephthalate can allow for reduced costs of the nonwoven laminate.

The polyethylene terephthalate can confer high homogeneity of mechanical properties of the nonwoven laminate. Thereby, the homogeneity of elongation and tensile strength of the nonwoven laminate can be enhanced. The nonwoven laminate can thereby be easily heated and shaped to provide a desired configuration. The nonwoven laminate can thereby be dimensionally stable when heated and shaped. The polyethylene terephthalate can provide a relatively low basis weight to the layers and the overall laminate, respectively.

The polyethylene terephthalate has a comparably high melting point of about 260°C. The nonwoven laminate can thereby have high heat resistance and nonflammability characteristics. Melting points are herein preferably melting points determined according to DIN ISO 11357-3:2013.

The polyethylene terephthalate comprised by all layers is comparably inexpensive, which can provide a reduction of costs for articles comprising the nonwoven laminate.

All layers comprise copolyester. The copolyester can be amorphous copolyester, crystalline copolyester or a mixture of amorphous copolyester and crystalline copolyester. If present, the optional layer (B) has a higher copolyester content than layer (A). The respectively higher copolyester content can strengthen the bonding of layer (A) to layer (C). The respectively higher copolyester content can thus increase the peel strength of layer (A).

The nonwoven laminate may consist of layers (A), (B), (C), or only layers (A) and (C) which is particularly preferred.

A nonwoven laminate consisting of layers (A) and (C) is preferred. The two-layer laminate is advantageous from the viewpoint of a simplified producibility and cost efficiency. No additional feeding device for layer (B) is required for producing such a laminate. Surprisingly, it was found that a nonwoven laminate which consists only of layers (A) and (C) and/or a moulded article obtained therefrom can meet the requirements for structural parts for automotive applications.

Optionally, a layer (B) can be included, which functions as an adhesive layer. Layer (B) can increase the bonding strength between the outer layers (A) and (C). Delamination of layer (A) from layer (C) can be advantageously reduced in such a laminate. A nonwoven laminate comprising layers (A), (B) and (C) can be preferred from the viewpoint of an increased peel strength.

Preferably, none of the layers (A), (B), (C) is mechanically bonded to any other layer in the nonwoven laminate. It is especially preferred that none of layers (A), (B), (C) is needled to any other of the layers. In other words, there is no entanglement between any two of layers (A), (B), (C). In particular, none of the fibres comprised by needled staple fibre nonwoven layer (C) extends into any of layers (A) and (B). More preferably, none of the fibres of needled staple fibre nonwoven layer (C) penetrates through any of layers (A) and (B). The absence of mechanical bonding can minimize the undesirable formation of elephant skin upon heating, so that appealing aesthetics can be achieved. Further, a moulded product produced from the nonwoven laminate without mechanical bonding can be advantageously flat, particularly without wrinkles, a wavy structure, or the like. Further, its bending strength can be increased.

It is preferred that the needled staple fibre nonwoven layer (C) is heat-shrunk, before it is combined with layer (A). Preferably, the needled fibres upon exposure to heat shrink in both machine and cross directions. A heat-shrunk layer (C) can avoid undesired further shrinkage. This can avoid undesired formation of elephant skin during a subsequent moulding process.

It is preferred that less than 20%, more preferably less than 10% of all fibres contained in the nonwoven laminate are not PET or copolyester. Most preferably, all fibres contained in the nonwoven laminate are from PET, copolyester or mixtures thereof. When all fibres contained in the nonwoven laminate are predominantly, and preferably exclusively, made of PET, copolyester or mixtures thereof, the nonwoven laminate can have relatively low costs, relatively low weight and relatively high peel strength.

It is preferred that the nonwoven laminate does not contain polyolefin, in particular not polypropylene. The nonwoven laminate can thereby be recycled more easily. The heat resistance characteristics and nonflammability characteristics of the nonwoven laminate can thereby be increased. The homogeneity of mechanical characteristics of the nonwoven laminate, especially its elongation and tensile strength, can thereby be increased. This can allow easier tailoring of the characteristics of a product comprising the nonwoven laminate.

It is preferred that the nonwoven laminate is free from silicon and/or fluorine. Thus, it does not comprise silicon compounds and/or fluorine compounds. It was found that the advantageous properties can be achieved without additives such as polyalkylsiloxanes or per-fluorinated compounds, which are included in the composite material of US2018/0251924A1. This is advantageous for convenient processing, low costs and recycling.

It is preferred that the nonwoven laminate does not contain inorganic reinforcements, in particular not glass fibres. The absence of inorganic reinforcements, in particular of glass fibres, can ease the processability. The absence of inorganic reinforcements, in particular of glass fibres, can lower the costs for an article comprising the nonwoven laminate.

It is preferred that the nonwoven laminate does not contain any lofting agent. The absence of any lofting agent can increase the dimensional stability of the nonwoven laminate when the nonwoven laminate is heated and shaped. The absence of any lofting agent can lower the costs for an article comprising the nonwoven laminate.

Surprisingly, it was found that the nonwoven laminate from only two layers (A) and (C), and the moulded article obtained therefrom, are suitable for structural parts for automotive applications. The mechanical stability, but also sound adsorption, can meets standard tests for automotive parts, as defined for original equipment manufacturers (OEM). Such standards are used in the technical field for parts and equipment provided for use by another manufacturer.

It is preferred that the copolyester in all layers is a copolymer of polyethylene terephthalate. A copolymer of polyethylene terephthalate comprises the monomers terephthalic acid, ethane-1,2-diol, and at least one further different dicarboxylic acid monomer and/or at least one further different diol monomer. A preferred further dicarboxylic acid monomer is adipic acid. Another preferred further dicarboxylic acid monomer is isophthalic acid. A preferred further diol monomer is cyclohexane dimethanol. A copolymer of polyethylene terephthalate can ease the recyclability of the nonwoven laminate. A copolymer of polyethylene terephthalate can increase the peel strength within the nonwoven laminate. A copolymer of polyethylene terephthalate can reduce the costs of the raw materials for the nonwoven laminate.

It is preferred that the copolyester in all layers has a melting point of ≤ 240°C. It is more preferred that the copolyester has a melting point of ≤ 220°C, further preferred of ≤ 210°C, even more preferred of ≤ 200°C and still more preferred of ≤ 190°C, in particular of = 180°C. A copolyester having a melting point of ≤ 240°C can reduce the energy required for melt-bonding the layers to each other. A copolyester having a melting point of ≤ 240°C can reduce the energy required for producing spunbond layers (A), (B). The energy reductions can increase continuously when going to the lower melting points of ≤ 220°C, ≤ 210°C, ≤ 200°C, ≤ 190°C and = 180°C, respectively.

It is preferred that the copolyester in layer (A) has a melting point which is higher than the melting point of the copolyester in layer (C), more preferably higher by ≥ 20°C, still more preferably higher by ≥ 30°C, and even further preferably higher by ≥ 35°C. In this way, a stronger bond between the layers of the nonwoven laminate after melt-bonding can be achieved.

For the case that layers (B) is not present, which is particularly preferred, it is preferred that the copolyester in layer (A) has a melting point of 205 to 240°C, even more preferred of 210 to 230°C and still more preferred of 210 to 225°C. In this case, the copolyester in layer (C) preferably has a melting point of 160 to 200°C, even more preferred of 170 to 190°C and still more preferred of 175 to 185°C.This can avoid a delamination of layer (A) from layer (C).

It is preferred that the copolyester in all layers has a melting point of ≥ 100°C. It is more preferred that the copolyester has a melting point of ≥ 110°C, even more preferred of ≥ 140°C °C and still more preferred of ≥ 160°C. A copolyester having a melting point of ≥ 100°C can increase the bonding strength between the layers after melt-bonding.

It is preferred that the copolyester in all layers has a melting point in the range of 100 to 240°C, more preferred in the range of 110 to 240°C, even more preferred in the range of 140 to 230°C and still more preferred in the range of 160 to 225°C. A copolyester having a melting point within these ranges can reduce the energy required for melt-bonding the layers to each other, can reduce the energy required for producing spunbond layers (A), (B) and can increase the bonding strength between the layers after melt-bonding.

It is preferred that the copolyester in layers (A), (B), in particular in layer (A), is basically neutral, i.e. has a pH value of 6.5 to 7.5, more preferably of 6.8 to 7.2, and still more preferably of 7.0. This can avoid undesired chemical interaction of the surfaces of the nonwoven laminate with the environment.

It is preferred that the copolyester in layers (A), (B), in particular in layer (A), has a density of 1.1 to 1.6 g/cm³, more preferably of 1.2 to 1.5 g/cm³, and still more preferably of 1.3 to 1.4 g/cm³. The density is determined according to DIN EN ISO 1183-1:2019-09. Such a density can lead to a laminate of appropriate strength, while avoiding excessive costs.

It is more preferred that the copolyester in all layers is a copolymer of polyethylene terephthalate and that the copolymer simultaneously has a melting point of ≤240°C. This can lead to a simultaneous increase of peel strength, lowering of costs and lowering of required energy for melt-bonding the layers and for producing the spunbond layers.

When layer (B) is present, it is preferred that layer (A) comprise 2% to 30% copolyester, more preferred 5 to 25% copolyester. When layer (B) is not present, it is preferred that layer (A) comprises at least 30% copolyester, more preferred 30 to 70% copolyester, in particular preferred at least 40% copolyester, at least 50% copolyester, at least 60% copolyester, or at least 70% copolyester. Such a copolyester content can avoid a wavy structure of the laminate. Such a copolyester content can further achieve an increased bending strength of the laminate. Herein, % refers to % by weight, unless noted otherwise.

When layer (B) is present and layer (A) comprises 2% to 30% copolyester, it can become easier to melt-bond layer (A) to layer (B) or layer (C). When layers (A) comprises 2% to 30% copolyester, the peel strength of layer (A) can be increased. When layer (A) comprises 5% to 25% copolyester, the melt-bonding easiness and the peel strength of layer (A) can even further increase.

When layer (A) comprises at least 30%, more preferably at least 40%, at least 50%, at least 60% or at least 70% copolyester, a laminate without layers (B) can have increased peel strength. The production of the laminate can thereby be simplified. In such a case in which layer (B) is preferably not present, it is particularly preferred that the copolyester in layer (A) has a melting point of 205 to 240°C, even more preferred of 210 to 230°C and still more preferred of 210 to 225°C. In this case, the copolyester in layer (C) preferably has a melting point of 160 to 200°C, even more preferred of 170 to 190°C and still more preferred of 175 to 185°C. This can in particular avoid a delamination of layer (A) from layer (C).

It is preferred that needled staple fibre nonwoven layer (C) consists of 10 to 90% of monocomponent staple fibres (c1) and 10 to 90% of multicomponent staple fibres (c2). It is more preferred that layer (C) consists of 20 to 80% of monocomponent staple fibres (c1) and 20 to 80% of multicomponent staple fibres (c2), even more preferred of 30 to 70% of monocomponent staple fibres (c1) and 30 to 70% of multicomponent staple fibres (c2), still more preferred of 40 to 60% of monocomponent staple fibres (c1) and 40 to 60% of multicomponent staple fibres (c2), and most preferred of 50% of monocomponent staple fibres (c1) and 50% of multicomponent staple fibres (c2). When layer (C) consists of 10 to 90% of monocomponent staple fibres (c1) and 10 to 90% of multicomponent staple fibres (c2), it can be more easily produced as a needled layer. When layer (C) consists of 10 to 90% of monocomponent staple fibres (c1) and 10 to 90% of multicomponent staple fibres (c2), it is predominantly made of polyethylene terephthalate. This can reduce the weight of the nonwoven laminate, can lead to high heat resistance and nonflammability characteristics of the nonwoven laminate and can reduce the costs of the nonwoven laminate. These effects increase with the ratio of (c1)/(c2) approaching the value of 1, i.e. these effects increase in the order 20-80% (c1)/20-80% (c2); 30-70% (c1)/30-70% (c2); 40-60% (c1)/40-60% (c2); 50% (c1)/50% (c2).

Staple fibres (c1) are monocomponent fibres, i.e. they consist of polyethylene terephthalate. Staple fibres (c2) are multicomponent fibres, i.e. they consist of two or more components. A first component of staple fibres (c2) is polyethylene terephthalate. A second component of staple fibres (c2) is copolyester. One or more additional components of staple fibres (c2) may be present. It is preferred that staple fibres (c2) are bicomponent fibres, i.e. that they consist of polyethylene terephthalate and copolyester. It is preferred that the bicomponent fibres have an island-in-the-sea filament construction, a pie-segment filament construction, a sheath-core filament construction or a side-by-side filament construction, more preferably a sheath-core filament construction. The copolyester component is generally present at a surface of such bicomponent fibres.

It is preferred that the staple fibres (c2) have at least one, more preferably two or more and most preferably all of the following characteristics:
- a fineness of1 to 10 dtex, more preferably 3 to 6 dtex, still more preferably 4 to 6 dtex, determined according to DIN EN ISO 1973:2020-05;
- a fibre length of 30 to 100 mm, more preferably 40 to 60 mm, still more preferably 45 to 55 mm;
- a strength of 1 to 6 g/de, more preferably 2 to 5 g/de, still more preferably 3 to 4 g/de, determined according to DIN EN 13844:2003-04;
- an elongation of 20 to 60%, more preferably 30 to 50%, still more preferably 35 to 55%, determined according to DIN EN ISO 5079:2020-01;
- a crimp of 4 to 10 EA/inch, more preferably 5 to 9 EA/inch, still more preferably 6 to 8 EA/inch, determined according to JIS L-1074;
- a heat shrinkage of 3 to 7%, more preferably 4 to 6%, still more preferably 3.5 to 4.5%, at 75°C x 15 min, determined according to DIN EN 13844:2003-04; and
- a melting point of 160 to 200°C, more preferably 170 to 190°C, still more preferably 175 to 185°C.

When the staple fibres (c2) have at least one, more preferably two or more and most preferably all the above characteristics, the needled staple fibre nonwoven layer (C) can simultaneously impart strength, flexibility and mouldability to the nonwoven laminate.

It is preferred that layer (C) has a basis weight according to DIN EN 29073-1:1992-08 of ≤ 2900 g/m², more preferably of 400 to 2500 g/m². For applications in standard passenger cars, it is preferred that layer (C) has a basis weight of 600 to 1500 g/m², more preferably of 700 to 1200 g/m² and most preferably of 800 to 1000 g/m².

It is more preferred that layer (C) consists of 10 to 90% of monocomponent staple fibres (c1) and 10 to 90% of multicomponent staple fibres (c2), and simultaneously has a basis weight according to DIN EN 29073-1:1992-08 of ≤ 2900 g/m², more preferably of 600 to 1500 g/m². In this way, nonwoven layer (C) can be more easily produced as a needled layer and the nonwoven laminate can be versatile for use as structural parts, especially for vehicles.

It is preferred that the spunbond nonwoven layer (A) has a basis weight according to DIN EN 29073-1:1992-08 of 20 to 200 g/m², more preferably of 30 to 80 g/m². The overall properties can be especially advantageous when such a relatively light weight spunbond layer is included.

It is preferred that the overall nonwoven laminate has a basis weight according to DIN EN 29073-1:1992-08 of 650 to 1600 g/m². Preferably, the nonwoven laminate has a thickness of 2 to 8 mm.

In case an additional spunbond layer (B) is included, it is preferred that the fibres of nonwoven layer (B) consist of copolyester, because it can then become easier to melt-bond all layers to each other. The spunbond nonwoven layer (B) can increase the peel strength of layer (A). It is preferred that spunbond nonwoven layer (B) has a basis weight according to DIN EN 29073-1:1992-08 of 1 to 100 g/m², preferably of 5 to 50 g/m², more preferably of 10 to 20 g/m². Thereby, a good balance between a light weight of the laminate and a high wear resistance of the laminate can be achieved.

In a preferred embodiment, the laminate
- does not comprise spunbond nonwoven layer (B),
- the copolyester in layers (A), (C) is a copolymer of polyethylene terephthalate, said copolymer having a melting point of 100 to 240°C; and
- the needled staple fibre nonwoven layer (C) consists of 40 to 60% of monocomponent staple fibres (c1) and 40 to 60% of multicomponent staple fibres (c2).

Such a preferred nonwoven laminate can be easily heated and shaped to provide a desired configuration. It can be dimensionally stable when it is heated and shaped. It is in particular suited for structural parts, especially for exterior applications, preferably for vehicles. Due to the absence of layer (B), the costs can be reduced and the production can be simplified.

In a further embodiment,
- the copolyester in layers (A), (B), (C) is a copolymer of polyethylene terephthalate, said copolymer having a melting point of 100 to 240°C;
- spunbond nonwoven layer (B) consists of copolyester and has a basis weight according to DIN EN 29073-1:1992-08 of 10 to 20 g/m²; and
- the needled staple fibre nonwoven layer (C) consists of 40 to 60% of monocomponent staple fibres (c1) and 40 to 60% of multicomponent staple fibres (c2).

Such a nonwoven laminate can be easily heated and shaped to provide a desired configuration. It can be dimensionally stable when it is heated and shaped. It is suited for structural parts, especially for vehicles. Due to the presence of layer (B), the peel strength and heat resistance can be high.

Subject of the invention is also a moulded article comprising the inventive nonwoven laminate. The moulded article is obtainable by moulding the nonwoven laminate in a form (a "mould"). Typically, moulding is carried out under heat and/or pressure. After or during moulding, the nonwoven laminate is consolidated. Typically, the density is increased and the porosity is decreased, whilst the mechanical stability is increased. The moulded article can be moulded into a defined form and shape. It is typically rigid, such that it can be cut. Overall, a mechanically stable and relatively light-weight article is obtainable, which is suitable for automotive applications, such as underbody shields. Preferably, the moulded part has the shape of the desired automotive part, such as an underbody shield.

In a preferred embodiment, the moulded article is obtained by cold moulding. In the cold mould process, the nonwoven laminate is preferably preheated at a temperature range between 180°C and 220°C for 1 to 5 min depending on the basis weight. This is to activate the low melting copolyester which acts as a binder. By activating the binder, it melts and forms a kind of glue between the virgin or recycled PET fibres. It also acts as a glue between the staple fibre nonwoven layers and the spunbond nonwoven layers. After activating, the nonwoven laminate is placed in a compression mould. The compression mould may then compress all or a portion of the nonwoven laminate at a tonnage of 50 tons to 200 tons. The nonwoven laminate is allowed to remain in the mould for up to 60 seconds. The compressed nonwoven laminate is allowed to cool inside or outside the mould to allow the copolyester fibres in the staple fibres and in the spunbond construction to cool below their melting point. Thereafter, the nonwoven laminate is converted to its final shape. For example, the final thickness of the material can be between 2 mm and 6 mm, depending on the requirements of the intended application. The nonwoven laminate is then trimmed as required, which may be achieved by mechanical, thermal or waterjet cutting.

An inventive moulded article profits from the advantages of the nonwoven laminate described herein. Particularly pronounced is the effect of reduced formation of elephant skin during moulding and the advantages associated therewith.

It is preferred that the moulded article and/or nonwoven laminate has at least one of the following characteristics:
- a bending strength according to ISO 178:2019-04 of ≥ 330 MPa;
- a tensile strength according to ASTM 5034:2009 of ≥ 780 N; and/or
- a tear strength according to DIN EN 29073-3:1992-08 of ≥ 110 N.

A bending strength of ≥ 330 MPa, a tensile strength of ≥ 780 N and/or a tear strength of ≥ 110 N can lead to high wear resistance of the nonwoven laminate. A bending strength of ≥ 330 MPa, a tensile strength of ≥ 780 N and/or a tear strength of ≥ 110 N can increase the acoustic absorption of the nonwoven laminate.

It is more preferred that the nonwoven laminate has a bending strength of ≥ 370 MPa, even more preferred of ≥ 400 MPa and still more preferred of ≥ 430 MPa. It is more preferred that the nonwoven laminate has a tensile strength of ≥ 850 N, even more preferred of ≥ 900 N and still more preferred of ≥ 950 N. It is more preferred that the nonwoven laminate has a tear strength of ≥ 125 N, even more preferred of ≥ 145 N and still more preferred of ≥ 165 N. The bending strength, tear strength and tensile strength can be adapted by adjusting parameters such as the thickness of layers, fibre type, amount of binder copolymer and consolidation method. Thereby, the mechanical properties of the nonwoven laminate, such as stone-chipping resistance and acoustic absorption can be further increased.

The nonwoven laminates and moulded articles can be used in the automotive industry, and thus for vehicles, but also for transportation means in general, i.e. for ground, naval or aerospace applications, for example for airplane, ship or railway parts. They are especially suitable for structural parts, especially for vehicles, for which a high stability is required.

The nonwoven laminate or moulded article are especially suitable for exterior applications, preferably for vehicles. Preferred exterior applications are especially those in which high stress and strain is experienced, such as underbody shields, wheel arch liners or engine shields. The use for exterior applications profits from the advantages of the nonwoven laminate and/or moulded article described herein. Particularly pronounced are the effects of enhanced mechanical stability, resistance against stone-chipping and wear resistance, high heat resistance, nonflammability characteristics and acoustic adsorption and the advantages associated therewith. Preferably, in the exterior application the shaped article is arranged such that layer (C) is directed to the exterior. Since layer (C) is the surface layer, it is exposed to the exterior. Thus, the shaped article is arranged such that layer (A) is oriented towards the interior.

Subject of the invention is also a structural part, preferably for exterior application, comprising the moulded article of the invention, preferably for vehicles. The exterior part is preferably an underbody shields, wheel arch liner or engine shield. Subject of the invention is also an interior product comprising the moulded article of the invention, preferably for vehicles. The interior product is preferably a panel, casing, cladding, reinforcement or boarding. The interior product is preferably for doors, roofs, trunks or seats. Subject of the invention is also a vehicle, comprising the moulded article and/or structural part of the invention.

In further embodiments, the nonwoven laminates and moulded articles can be used for interior applications, especially for vehicles. Preferred interior applications are panels, casings, cladding, reinforcements or boarding, for example for doors, roofs, trunks or seats. The use for interior applications profits from the advantages of the nonwoven laminate and/or moulded article described herein.

The inventive nonwoven laminate can be produced in a process, comprising:
- preparing a needled staple fibre nonwoven layer (C) by needling;
- providing in order layers (A), optionally (B), and (C); and
- melt-bonding the layers to each other.

The process for producing the nonwoven laminate profits from the advantages of the nonwoven laminate. Particularly pronounced is the effect of an easy joining of the layers by melt-bonding, which can result in increased peel strength, and the advantages associated therewith.

In preferred embodiments, layer (c) can be produced as outlined in the following. Before the needling process, fibres (c1) and (c2) are opened from bales, mixed and carded.

Thereafter, fibres (c1) and (c2) are cross-lapped and passed onto a needling machine. An alternative fibre preparation is done with an airlay or air-laid process in which the opened fibres are collected on a suction band and needled. The needled nonwoven fabric can be pre-shrunk by application of heat to avoid shrinkage during a subsequent moulding process. Staple fibres (c1) and/or (c2) preferably have a staple length in the range of 10 mm to 150 mm, more preferably of 40 mm to 100 mm.

In one embodiment, layer (C) contains a mixture of 10 to 70% of virgin or recycled PET staple fibres (c1) in combination with 30 to 90 % of bicomponent fibres (c2). The bicomponent fibres have a sheath-core construction in which the sheath has a melting point that is less than the melting point of the core. The bicomponent fibres preferably assume a variety of geometric configurations, such as side-by-side, sheath-core, segmented pie or island-in-the-sea structures.

In one embodiment, the binder polymer in a bicomponent fibre (c2) is selected based on its melting point. In a preferred sheath-core configuration, the core preferably consists of PET and the sheath preferably consists of a copolyester having a melting point of < 200°C. One particularly preferred binder fibre has a sheath-core filament configuration. The core consists of PET having a melting point of > 250°C, i.e. of about 260°C, and the sheath comprises a copolyester having a lower melting point in the range between 100°C and 200°C.

In one embodiment, layer (C) is pre-shrunk to avoid further shrinkage in a subsequent moulding process. The pre-shrinkage is carried out after the needling process. The needled staple fibres are processed through an oven which is normally set above the melting point of the low melting copolymer. For example, for bicomponent fibres having a sheath polymer which has a melting point of 180°C, the temperature set for the oven may be more than 180°C.

In one embodiment, layer (A) can be a coarse denier spunbond nonwoven fabric weighing between 30 and 150 g/m². The spunbond is a PET-based filament having a circular construction with an amount of 1 to 50% of copolyester. The copolyester melts during a moulding process and helps to adhere to the adjacent layer. In addition, the basis weight of layer (A) is significantly lower than the weight of layer (C). This can be desirable under circumstances where one desires a light overall weight of the final part and cost reduction. Layer (B), if included between layers (A) and (C), can be a copolyester-based spunbond nonwoven layer. This copolyester-based spunbond nonwoven layer is used to enhance the bonding of layer (A) to layer (C), i.e. it functions as an adhesive layer. The adhesive layer (B) comprises a low melting co-polyester. Its weight preferably ranges from 1 g/m² to 50 g/m². In this embodiment, layer (C) can be pre-shrunk to avoid shrinkage during a subsequent moulding process.

The copolyester in all layers melts during moulding and promotes bonding to adjacent layers. The fibres of the nonwoven laminate, in particular fibres containing copolyester, may thereby partially or fully lose their fibrous structure in the laminate after melt-bonding. A resulting structure is encompassed by the inventive nonwoven laminate. If no adhesive layer (B) is present, the amount of copolyester in layer (A) is usually increased.

The overall laminate is formed by establishing a melt-bond, but no mechanical bond, between all layers. Subsequently, the laminate is in the condition for moulding into a desired shape for a particular application. The layered construction is moulded either in a cold mould process or in a hot mould process.

Preferably, the multicomponent fibers are bicomponent fibers. A pie-segment filament structure is particularly useful for the multicomponent filaments. Multicomponent filaments are multicomponent staple fibres (c2), and can be present in spunbond nonwoven layers (A) and/or (B). Preferably, the multicomponent filament has eight segments alternatingly consisting of PET segments and copolyester segments. It may alternatively have a filament construction from 16, 32 or 64 segments alternatingly consisting of PET segments and copolyester segments. During a moulding process, the low melting copolyester melts and provides rigidity to the material.

A sheath-core filament structure can be useful for spunbond nonwoven layer (A) and/or (B) as well as for multicomponent staple fibres (c2). The bicomponent filament construction can consist of a sheath of low melting copolymer and of a core of PET having a higher melting point. During a moulding process, the low melting copolyester melts and confers rigidity to the material.

A side-by-side filament structure can be useful for spunbond nonwoven layer (A) and/or (B) as well as for multicomponent staple fibres (c2). The side-by-side filament construction consists of one side of the low melting copolymer and of another side of PET having a higher melting point. During the moulding process, the low melting copolyester melts and provides rigidity to the material.

Preferably, the monocomponent fibers in the nonwoven laminate, and in particular the monocomponent staple fibers in layer (C), are conventional fibers, which preferably have a round or substantially round cross-section. Such a fiber form is obtainable by spinning the fibers from simple round or oval orifices. Preferably, the nonwoven laminate does not comprise monocomponent fibers having an unusual shape, such as the hollow fibers. It was found that advantageous properties can be achieved with standard fibers, which is advantageous for costs and production.

The moulded article and nonwoven laminate solve the problem underlying the invention. The product has high mechanical stability and good acoustic properties, recyclability, low weight and low heat shrinking, and shows reduced elephant skin effect. Moreover, the material has a high resistance against stone-chipping. Accordingly, the nonwoven composites and moulded articles are highly suitable for structural parts and/or exterior applications, especially for vehicles, such as underbody shields, wheel arch liners or engine shields. The materials are available at low costs and can be produced and shaped in a convenient and simple method.

### Examples

### Example 1 - Production of two-layer nonwoven laminate

The following materials were used for producing a nonwoven laminate:
Staple fibres (for layer (C)):
   50% monocomponent staple fibres (c1):
   Material: r-PET
   Staple length: 64 mm
   Fineness: 6.7 dtex
   Basis weight: 800 - 1000 g/m²
   50% bicomponent staple fibres (c2):
   Configuration: sheath-core
   Material: sheath of PET; core of copolyester having a melting point of 180°C
   Staple length: 51 mm
   Fineness: 5 dtex
Spunbond (for layer (A)):
   Material: 90% PET; 10% copolyester of PET (CoPET)
   Basis weight: 50 g/m²
   Thickness: 0.33 to 0.59 mm
   Filament diameter: 25 - 60 µm

The staple fibres were mixed in a weight ratio of 50:50. The staple fibres were then carded, cross-lapped and needled. The needles used were Groz-Beckert 36gg fine needles with a total needling intensity of 350 needles/cm². The needling depth was set at 10 mm on both sides. The needled material was then passed through a through air oven which was heated up to 200°C at a rate of 10°C/min. This heating of the needled material activated the bicomponent fibres. This made the material coming out of the oven to be stiff. Layer (C) was thereby produced. The layer (C) was then passed through a set of calendar rollers where the layer (A) was introduced. The calendar pressure was set at 25 bars on both sides and at a temperature of 200°C, thereby producing a nonwoven laminate in which the layers (A) and (C) are melt-bonded to each other. The layers are not mechanically bonded to each other. The produced two-layer laminate was then sheet-cut.

### Example 2 - Production of moulded article

The sheet-cut material of example 1 was introduced into an oven heated up to 210°C for 3 min (in case of a through air oven) or 1 min (in case of an infra-red oven). The material became soft due to the heat. It was then transferred immediately to a cold press where the material was moulded at high pressure (50 tons or more). The nonwoven laminate is allowed to remain in the mould for up to 60 seconds. The compressed nonwoven laminate is allowed to cool inside or outside the mould to allow the copolyester fibres in the staple fibres and in the spunbond construction to cool below their melting point. Thereafter, the nonwoven laminate is converted to its final shape.

### Example 3 - Acoustic properties

The acoustics properties of samples of the moulded article of example 2 were tested. The tested sample is laid in an Alpha-Cabin either near to the wall or the ground with an air gap of 2 mm. The absorption coefficient of the samples is then measured by a series of sensors in the cabin. The results of the Alpha-cabin test for samples having a moulded thickness of 5 mm are shown in Table 1 below.

**Table 1: Results of acoustic tests for moulded article**

| Frequency [Hz] | absorption coefficient |
|---|---|
| 400 | 0.064 |
| 500 | 0.106 |
| 630 | 0.143 |
| 800 | 0.190 |
| 1000 | 0.267 |
| 1250 | 0.389 |
| 1600 | 0.519 |
| 2000 | 0.622 |
| 2500 | 0.786 |
| 3150 | 0.878 |
| 4000 | 0.934 |
| 5000 | 0.938 |
| 6300 | 0.910 |
| 8000 | 0.873 |
| 10000 | 0.817 |

The higher the sound absorption coefficient αₛ, the better is the acoustic performance of the tested sample. The results demonstrate that the moulded article from the two-layer nonwoven laminate has a high sound absorption. The tested wavelength range is especially relevant for underbody shields for automotive application, wherein the vehicle interior must be shielded from the noises underneath the vehicle.

Moreover, it was found in a comparative example, that the sound absorption efficiency of a moulded article according to EP3769954A1, which was obtained from a corresponding three-layer nonwoven laminate having an additional spunbond layer on the opposite surface of layer (C), is approximately the same.

### Example 4 - Mechanical properties

The bending strength of the moulded article from the two-layer nonwoven laminate was determined. For comparison, the bending strength was also determined for the moulded article according to EP3769954A1, which was obtained from the corresponding three-layer nonwoven laminate (see example 3).

The pressure was determined, which is required for bending the material by 2 mm under the following test conditions:

| | |
|---|---|
| Pressure at start: | 0.5 N |
| Speed: | 10 mm/min |
| Distance between sample holder: | 64 mm |
| Radius of pressing element: | 5 mm. |

**Table 2: Mechanical properties of 2-layer composite and 3-layer laminate (comparative)**

| Properties | Unit | 2-Layer laminate | 3-Layer laminate (comparative) |
|---|---|---|---|
| Bending strength | g/m² | 1072 | 1155 |

As can be seen from Table 2, the moulded article from the two-layer nonwoven laminate has a high bending strength. The bending strength of the moulded article from the two-layer laminate meets the requirements for an underbody shield for automotive applications. The bending strength is only slightly lower than for the comparative three-layer laminate.

### Example 5 - Stone-chip resistance

The stone-chip resistance of the moulded article from the two-layer laminate, and from the comparative three-layer laminate as described in the preceding examples, were examined in a test based on DIN EN ISO 20567-1:2017. The standard is provided for testing paints and varnishes, but is also applicable for testing the moulded articles. Thus, the test is applied in the automotive sector as an OEM standard to simulate stone-chipping on the surface of automotive parts, such as underbody shields. In the test method, a defined amount of grit of defined dimensions is shot at the surface of a probe under specific harsh conditions. The performance is evaluated with standardized comparative images. Bevor each round of chipping, new chipping material is used and the amount is determined. The test was carried out in 1 kg steps from 0 kg to 8 kg, whereby 0 kg is the initial position. According to the OEM standard, the material passes the test if fringing on the surface is less than 4 mm, after the complete series of 0 kg to 8 kg grit has been targeted onto the surface. Fringing is the appearance of loose threads which protrude from the surface of the specimen. Nine specimens were tested in the assay. The test was carried out with a stone-chip tester (VDA, model 508, from Erichsen), under the following conditions:
- pressure: 2.0 bar (200 kPa)
- angle: 30°
- material: high-grade gravel grain size 5 - 8 mm
- amount of material: 1 to 8 kg
- specimen size: 100 mm x 100 mm
- test field: 80 mm x 80 mm
- testing time: 10 s per 500 g

The inventive moulded article from the two-layer laminate was positioned such that the stones chipped onto the surface corresponding to layer (C). The comparative moulded article from the three-layer laminate comprises two identical surfaces from spunbond nonwoven layers.

The comparative moulded article did not pass the test. Although no holes were found in the specimen, fringing was in the range of 4 to 8 mm and thus too high. Visual examination after stone-chipping showed that significant amounts of fibers and fiber bundles were protruding from the surface of the specimen. Thus, the fibrous surface became disintegrated during stone chipping.

For the moulded article from the two-layer material, no holes were found in the material after stone-chipping. Moreover, the level of fringing was low, and clearly below the threshold of 4 mm. Thus, the inventive material passed the standardized stone-chip test. Upon visual examination, the surface was relatively flat, without fibers or fiber bundles protruding from the surface.

The results demonstrate that the two-layer material has a significantly better resistance against stone-chipping test than the comparative three-layer material. The inventive material is suitable for exterior applications, such as underbody shields, wheel arch liners or engine shields for vehicles.

## Claims

1. Nonwoven laminate, consisting of, in order (A) to (C):
- a spunbond nonwoven layer (A) comprising fibres, which comprise polyethylene terephthalate (PET) and copolyester;
- optional, a spunbond nonwoven layer (B) comprising fibres, which comprise polyethylene terephthalate (PET) and copolyester, the nonwoven layer (B) having a higher copolyester content than nonwoven layer (A);
- a needled staple fibre nonwoven layer (C), comprising:
∘ monocomponent polyethylene terephthalate (PET) staple fibres (c1), and
∘ multicomponent staple fibres (c2), which comprise at least a polyethylene terephthalate (PET) component and a copolyester component.
wherein all layers are melt-bonded to each other.

2. The nonwoven laminate according to claim 1, wherein layers (A), (B) and (C) are not mechanically bonded to each other.

3. The nonwoven laminate according to at least one of the preceding claims, wherein the needled staple fibre nonwoven layer (C) is heat-shrunk.

4. The nonwoven laminate according to at least one of the preceding claims, which does not contain polyolefin, in particular not polypropylene.

5. The nonwoven laminate according to at least one of the preceding claims, wherein the copolyester in all layers is a copolymer of polyethylene terephthalate, said copolymer having a melting point of ≤ 240°C.

6. The nonwoven laminate according to at least one of the preceding claims, wherein layer (A) comprises 10% to 70% copolyester, in particular at least 30% copolyester.

7. The nonwoven laminate according to at least one of the preceding claims, wherein needled staple fibre nonwoven layer (C) consists of 10 to 90% monocomponent staple fibres (c1) and 10 to 90% multicomponent staple fibres (c2).

8. The nonwoven laminate according to at least one of the preceding claims, wherein the needled staple fibre nonwoven layer (C) has a basis weight of 600 to 1500 g/m² and/or the spunbond nonwoven layer (A) has a basis weight of 20 to 200 g/m², as determined according to DIN EN 29073-1:1992-08.

9. The nonwoven laminate according to at least one of the preceding claims, wherein:
- the nonwoven laminate consists of layers (A) and (C), and
- the copolyester in layers (A) and (C) is a copolymer of polyethylene terephthalate, said copolymer having a melting point of 100 to 240°C; and
- needled staple fibre nonwoven layer (C) consists of 40 to 60% of monocomponent staple fibres (c1) and 40 to 60% of multicomponent staple fibres (c2).

10. A moulded article comprising a nonwoven laminate according to at least one of claims 1 to 9.

11. The moulded article of claim 10, which is obtained by cold moulding or hot moulding a nonwoven laminate of at least one of claims 1 to 9.

12. A structural part for vehicles which comprises a moulded article of claim 10 or 11, wherein the structural part is preferably an underbody shield, wheel arch liner or engine shield.

13. A vehicle comprising a moulded article and/or structural part of at least one of claims 10 to 12.

14. Use of a moulded article of claim 10 or 11 as a structural part for vehicles, wherein the structural part is preferably an underbody shield, wheel arch liner or engine shield.

15. The use of claim 14, wherein the moulded article is arranged such that layer (C) is exposed to the exterior.
